# FASCICULE DE BREVET EUROPEEN

(11) **EP 0 367 007 B1**
(45) Date de publication et mention de la délivrance du brevet: **31.08.1994**
(21) Numéro de dépôt: 89119164.5
(22) Date de dépôt: 16.10.1989
(51) Int. Cl.: H04Q 7/04, H04B 7/26

(54) **Centre de commutation pour application radiomobile**
Vermittlungszentrale für den Einsatz im Mobilfunk
Switching centre for mobile radio application

(30) Priorité: 21.10.1988 FR 8813826
(43) Date de publication de la demande: 09.05.1990
(73) Titulaire: ALCATEL CIT, F-75015 Paris (FR)
(72) Inventeur: Issenmann, Edouard, F-78150 Le Chesnay (FR); Martin, Maurice, F-75013 Paris (FR)
(74) Mandataire: Weinmiller, Jürgen

(56) Documents cités:
- WO-A-85/02968
- COMMUTATION & TRANSMISSION, no. 2, 1988, pages 5-14, Paris, FR; P. DUPLESSIS et al.: " Le système Cellulaire Numérique Pan-Européen de Radiotéléphonie avec les Mobiles"
- P. BOCKER: "ISDN Das diensteintegrierende digitale Nachrichennetz, Konzept, Verfahren, Systeme", 1986, pages 141-143, Springer Verlag, Berlin
- PROCEEDINGS OF THE INTERNATIONAL SWITCHING SYMPOSIUM, Florence, 7-11 mai 1984, partie 2, session 32 B, paper 6, pages 1-4, North-Holland, Amsterdam, NL; J. HOOGEVEEN: "Control of mobile services"
- 38TH IEEE VEHICULAR TECHNOLOGY CONFERENCE, Philadelphia, 15-17 juin 1988, pages 30-37; W. FUHRMANN et al.: "Radio Access Protocol of the new GSM Land Mobile Communications Standard"
- INTERNATIONAL SWITCHING SYMPOSIUM, Phoenix, 15-20 mars 1987, pages 734-738; B. GHILLEBAERT: "The Second Generation Cellular System"
- IEEE COMMUNICATIONS MAGAZINE, vol. 25, no. 6, juin 1987, pages 22-30; E.S.K. CHIEN et al.: "Cellular Access Digital Network (CADN): Wireless Access to Networks of the Future"

## Description

L'invention concerne le raccordement au réseau téléphonique public commuté d'abonnés mobiles dans un réseau de radiotéléphonie cellulaire.

On connaît, par l'article de G. Söderholm, J. Widmark et E. Ornulf : "Ericsson Cellular Mobile Telephone Systems", Ericsson Revicw N°B 1987, pages 42 à 49, un ensemble de raccordement d'abonnés mobiles dans lequel les liaisons radioélectriques se font par allocation d'une fréquence à un abonné pour la durée d'une communication.

Dans cet ensemble les fonctions spécifiques à la gestion des abonnés mobiles et à la commutation téléphonique (voix et données) sont intégrées dans un même organe.

On connaît également, par l'article de P. Duplessis et F. Maillard : "Le système cellulaire numérique paneuropéen de radiotéléphonie avec les mobiles" Commutation et Transmission N°2, 1988 pages 5 à 14, un ensemble de raccordement d'abonnés mobiles dans lequel les liaisons radioélectriques se font selon la méthode d'accès multiple à répartition dans le temps (AMRT). Dans cet ensemble les fonctions de gestion dues à la mobilité des abonnés mobiles et celles propres à la communication sont traitées dans un même organe.

Dans ces deux systèmes, un même commutateur gére les fonctions de commutation et celles de traitement spécifiques de la mobilité des abonnés. Cette intégration possède un certain nombre d'inconvénients :
- elle nécessite l'emploi de commutateurs spécialisés,
- la puissance de traitement du commutateur est très importante et très sensible à la mobilité des abonnés et à la topologie du réseau cellulaire,
- la puissance de traitement de la signalisation est en grande partie liée aux aspects de mobilité des abonnés, sans rapport avec les fonctions de commutation,
- c'est un mélange de deux applications dans un même ensemble physique, d'où existence de difficultés de gestion, de mise à jour, et d'évolution de chaque application.

La demande de brevet WO 85/02968 décrit un système de radiotéléphonie comportant au moins un commutateur d'accès au service, et un point de contrôle radio-mobile assurant une séparation des fonctions de commutation et des fonctions de signalisation de l'application radio-mobile. Mais, dans ce système, le point de contrôle radio-mobile est relié directement à chacune des stations de base par une liaison de données, ce qui a pour inconvénient de nécessiter un très grand nombre de liaisons de données.
D'autre part, ce système ignore la localisation des abonnés. Il localise un abonné mobile demandé en émettant des signaux d'appel sur l'ensemble du territoire couvert par le réseau, ce qui nécessite l'émission d'un grand nombre de signaux d'appel dans un délai très court.

L'invention a pour but de supprimer les inconvénients des systèmes connus.

Ce but est atteint par le centre de commutation tel que défini par la revendication 1.

Le centre de commutation de l'invention présente un certain nombre d'avantages :
- il permet d'utiliser des commutateurs de même type que ceux utilisés dans le réseau téléphonique public commuté,
- il permet, par la séparation de l'application commutation de l'application radiomobile, une évolution indépendante de chaque application,
- la puissance de commutation reste celle d'un commutateur classique,
- la puissance de traitement de la signalisation du commutateur reste limitée aux fonctions de commutation,
- il permet une séparation totale des fonctions d'exploitation et de maintenance radiomobile et commutation,
- il permet, ce qui est appréciable, d'utiliser un commutateur du réseau téléphonique public commuté en le reliant directement à des contrôleurs de stations de base et en le reliant à un point de contrôle radiomobile,
- il permet également d'utiliser un point de contrôle radiomobile commun à plusieurs commutateurs, ceci même si les commutateurs sont de types différents, tels que par exemple des types E10 et S12 de la société ALCATEL,
- enfin, il offre l'avantage d'un coût unique de développement de l'application radiomobile quel que soit le type du commutateur utilisé.

L'invention sera bien comprise par la description d'un exemple de réalisation illustré par les figures annexées dans lesquelles :
- la figure 1 représente schématiquement l'architecture d'une partie d'un réseau radiotéléphonique cellulaire,
- la figure 2 représente les liens logiques d'un centre de commutation de la figure 1,
- la figure 3 représente schématique un centre de commutation de l'invention,
- la figure 4 représente une variante de réalisation du centre de commutation de la figure 3,
- la figure 5 représente l'utilisation d'un commutateur d'un réseau téléphonique comme commutation d'un centre de commutation.

D'une manière générale le réseau radiotéléphonique cellulaire est relié au réseau téléphonique public commuté RTPC ; le réseau radiotéléphonique comprend un sous système radio RSS et un sous système réseau NSS relié d'une part au sous système radio RSS et d'autre part au réseau téléphonique RTPC.

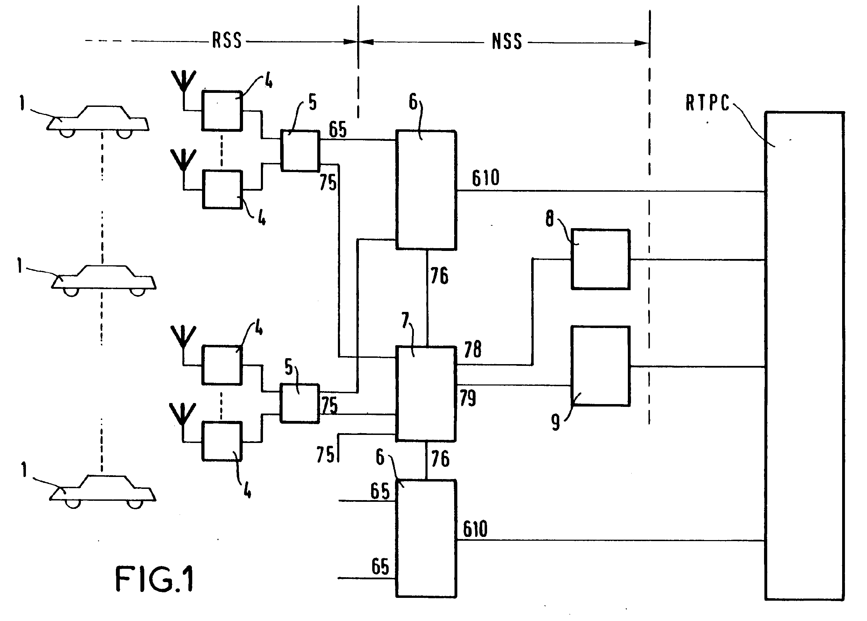

La figure 1 représente schématiquement une partie d'un réseau radiotéléphonique cellulaire relié au réseau téléphonique public commuté RTPC.

Le sous système radio RSS comprend des abonnés mobiles 1, des stations de base 4 en liaison radiotéléphonique avec les abonnés mobiles, lesdites stations de base comprenant des équipements radioélectriques d'émission et de réception, des contrôleurs de stations de base 5 reliés chacun à des stations de base 4 qui peuvent être distantes ou intégrées au contrôleur 5. Les liaisons entre un contrôleur 5 et les stations de base 4 sont des liaisons multiplex MIC normalisées par la CEPT (Conférence Européenne des administrations des Postes et Télécommunications). Les contrôleurs 5 assurent une concentration numérique vers le sous système réseau NSS auquel ils sont raccordés par l'intermédiaire de liaisons multiplex MIC et d'interfaces normalisées par la CEPT, dites interfaces A, lesdites liaisons multiplex acheminant des signaux de parole, de données et de signalisation selon le système de signalisation CCITT N° 7 qui est un système de signalisation par canal sémaphore défini par le CCITT, pour la transmission et les réseaux numériques.

Le sous système réseau NSS comprend un ou plusieurs centres de commutation 6 qui assurent chacun l'interface entre le sous système radio RSS et le réseau téléphonique RTPC, un fichier permanent 8 des abonnés mobiles du réseau radiotéléphonique cellulaire, un fichier temporaire 9 des abonnés mobiles présents dans la zone desservie par les centres de commutation 6 et les stations de base 4 de la partie du réseau radiotéléphonique représentée figure 1, ladite partie correspondant par exemple à une zone géographique. Le sous système réseau NSS représenté figure 1 comprend également un centre d'exploitation et de maintenance 7 appartenant au réseau radiotéléphonique ; ce centre d'exploitation et de maintenance est relié a chacun des centres de commutation 6 de la partie du réseau radiotéléphonique représentée figure 1 ; cependant si ladite partie du réseau radiotéléphonique ne comporte qu'un seul centre de commutation, celui-ci peut être relié à un centre d'exploitation et de maintenance d'une autre partie du réseau radiotéléphonique.

Un centre de commutation 6 est relié par des premières liaisons multiplex 65 à des contrôleurs 5, lesdites liaisons multiplex acheminant des signaux de parole, de données, et de signalisation ; il est relié par des deuxièmes liaisons multiplex 610 au réseau téléphonique public commuté RTPC, lesdites deuxièmes liaisons multiplex acheminant des signaux de parole, de données et de signalisation.

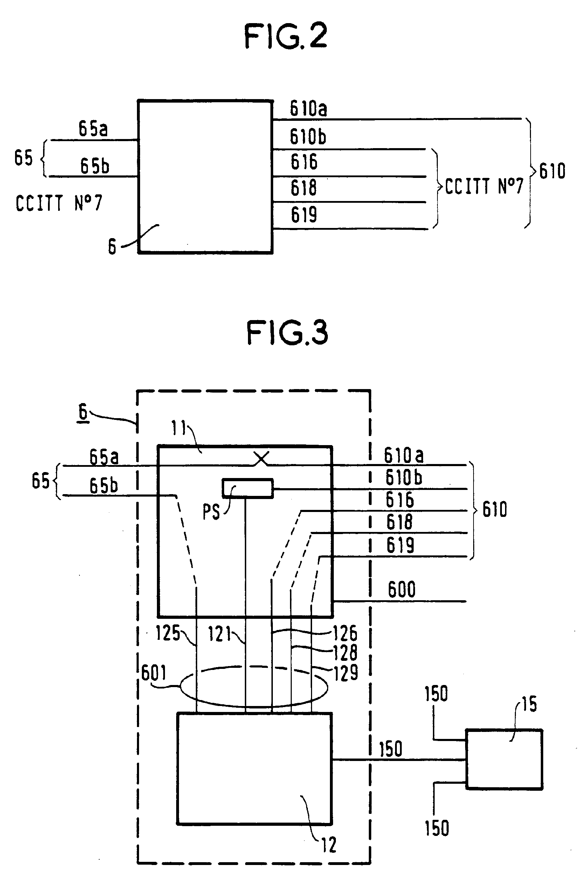

Le réseau téléphonique public commuté RTPC utilise des points de transfert de signalisation CCITT N° 7 qui sont utilisés par l'application radiomobile pour les liaisons 616, 618, 619 de la figure 2. Un fichier permanent 8 des abonnés mobiles et un fichier temporaire 9 des abonnés mobiles présents dans la zone géographique des centres de commutation 6 de la partie du réseau radiotéléphonique représentée figure 1, sont reliés aux centres de commutation par le réseau téléphonique public commuté, les échanges d'information se faisant par canaux sémaphores. Un centre d'exploitation et de maintenance 7 des centres de commutation 6 est relié auxdits centres de commutation par des liaisons 76, et aux fichiers permanent et temporaire par des liaisons 78 et 79, respectivement.

La figure 2 représente les liens logiques des liaisons reliant un centre de commutation 6 de la figure 1 aux contrôleurs 5 et au réseau téléphonique commuté. Une première liaison multiplex 65 comprend un lien logique 65a de parole et de données et un lien logique de signalisation 65b. Les deuxièmes liaisons multiplex 610 comprennent des liens logiques 610a pour la transmission de la parole et des données, des liens logiques de signalisation 610b pour la signalisation relative aux liens logiques 610a, des liens logiques de signalisation intercentres 616 pour relier le centre de commutation 6 aux autres centres de commutation 6 de la figure 1, pour des échanges d'informations, un lien logique de signalisation fichier permanent 618 et un lien logique de signalisation fichier temporaire 619 pour accéder auxdits fichiers. Les liens logiques de signalisation 65b, d'une part et 610b, 616, 618, 619 sont des canaux sémaphores des liaisons multiplex 65 et 610 ; les liens logiques 65a et 610a sont des canaux des liaisons multiplex 65 et 610, autres que les canaux sémaphores, et comme déjà indiqué les liens logiques de signalisation utilisent tous le système de signalisation CCITT N° 7.

Bien entendu, la signalisation acheminée par le lien logique de signalisation 610b pourrait être une signalisation utilisée dans le réseau téléphonique public commuté telle qu'une signalisation multifréquences.

La figure 3 représente schématiquement un centre de commutation 6 de l'invention, comprenant un commutateur d'accès au service 11 et un point de contrôle radiomobile 12.

Le commutateur d'accès au service 11 est un commutateur du même type que ceux utilisés dans les réseaux téléphoniques actuels, tels que par exemple les commutateurs E10 et S12 de la société ALCATEL. Il est relié aux contrôleurs 5 par des premières liaisons multiplex 65 et au réseau téléphonique public commuté par des deuxièmes liaisons multiplex 610 ; sur la figure 3 les liaisons multiplex 65 et 610 sont représentées, comme dans la figure 2, avec leurs liens logiques 65a, 65b et 610a, 610b, 616, 618, 619. D'autre part le commutateur d'accès au service 11 est relié par une liaison 600 à un centre d'exploitation et de maintenance du réseau téléphonique public commuté RTPC.

Le commutateur d'accès au service 11 commute, pour les deux sens d'une communication, les signaux de parole et de données entre les liens logiques 65a et 610a, c'est-à-dire entre les canaux des liaisons multiplex 65 et 610, et achemine par des liaisons semi-permanentes les signaux de signalisation entre le point de contrôle radiomobile 12 et les liens logiques de signalisation 65b.

Le commutateur d'accès au service 11 traite dans un point de signalisation PS toute la signalisation acheminée par le lien logique de signalisation 610b, pour les deux sens d'une communication. Il achemine par des liaisons semi-permanentes les signaux de signalisation entre le point de contrôle radiomobile 12 et les liens logiques de signalisation 616, 618 et 619, lesdits signaux de signalisation étant émis ou reçus par le point de contrôle radiomobile.

Le point de contrôle radiomobile 12 traite donc toute la signalisation relative à l'application radiomobile, le commutateur d'accès au service 11 ne traitant que la signalisation associée aux canaux de parole et de données du lien logique 610a. Le point de signalisation PS du commutateur d'accès au service 11 est relié par une liaison permanente au point de contrôle radiomobile 12.

Dans la figure 3 le point de contrôle radiomobile 12 et le commutateur d'accès au service 11 sont reliés par une liaison multiplex 601 qui comprend les liens logiques 125, 121, 126, 128 et 129 reliés respectivement au lien logique 65b, au point de signalisation PS, aux liens logiques 616, 618 et 619.

Le point de contrôle radiomobile 12 est également relié à un centre d'exploitation et de maintenance radiomobile 15 par une liaison 150. Le centre d'exploitation et de maintenance radiomobile 15 est affecté à une zone géographique du réseau radiomobile ; il est donc relié aux points de contrôle radiomobiles 12 des centres de commutation de cette zone. Si une zone géographique ne comporte qu'un centre de commutation, son point de contrôle radiomobile est relié au centre d'exploitation et de maintenance radiomobile d'une zone géographique voisine.

Le commutateur d'accès au service 11 assure les fonctions :
- de point de signalisation dans le réseau téléphonique public commuté auquel il est relié par le lien logique de signalisation 610b,
- de routage au niveau 1 des liaisons semi-permanentes entre le point de contrôle radiomobile 12 et les liens logiques 65b, 616, 618 et 619, c'est-à-dire les premières liaisons multiplex 65 et les deuxièmes liaisons multiplex pour ce qui concerne les canaux sémaphores de ces liaisons multiplex,
- d'interface de type réseau intelligent avec le point de contrôle radiomobile 12 pour les échanges d'informations par le lien logique 121 de la liaison multiplex 601,
- de prise en compte des commandes émises par le point de contrôle radiomobile sur le lien logique 121 pour l'exécution des opérations de transfert en cours d'appel,
- d'exécution de toutes les fonctions classiques de commutation (il faut noter que le commutateur d'accès au service 11 ne traite pas les signaux de signalisation provenant ou à destination des liens logiques 65b, 616, 618 et 619, mais qu'il établi uniquement des liaisons semi-permanentes entre ces liens logiques et le point de contrôle radiomobile 12),
- d'exécution des commandes d'exploitation portant sur l'exploitation du réseau téléphonique public commuté et transmises par le centre d'exploitation et de maintenance dudit réseau auquel il est relié par la liaison 600.

Le point de contrôle radiomobile 12 assure les fonctions :
- d'interface et de traitement de toute la signalisation de l'application radiomobile du sous système radiomobile RSS et du sous système réseau NSS,
- d'exécution de toutes les fonctions liées à la mobilité des abonnés,
- de point de signalisation national N° 7 pour l'application radiomobile, du sous système réseau NSS,
- de point de signalisation local N° 7 pour l'application radiomobile, du sous système radiomobile RSS,
- de commande du commutateur d'accès au service 11 en liaison avec les fonctions de mobilité des abonnés,
- de mise à jour du fichier temporaire 9 relatif aux abonnés mobiles présents dans la zone géographique desservie par un ou plusieurs centres de commutation,
- de supervision de l'élaboration des appels et des services associés,
- de taxation des appels,
- d'élaboration de l'observation de l'application radiomobile,
- d'exploitation de l'application radiomobile en liaison avec le centre d'exploitation et de maintenance de l'application radiomobile 15 auquel il est relié, cette fonction étant indépendante de celle du réseau téléphonique public commuté.

La structure d'un centre de commutation de l'invention, représentée figure 3, permet deux modes de réalisation du sous système réseau NSS.

Selon un premier mode de réalisation chaque centre de commutation est constitué d'un commutateur d'accès au service 11 et d'un point de contrôle radiomobile 12.

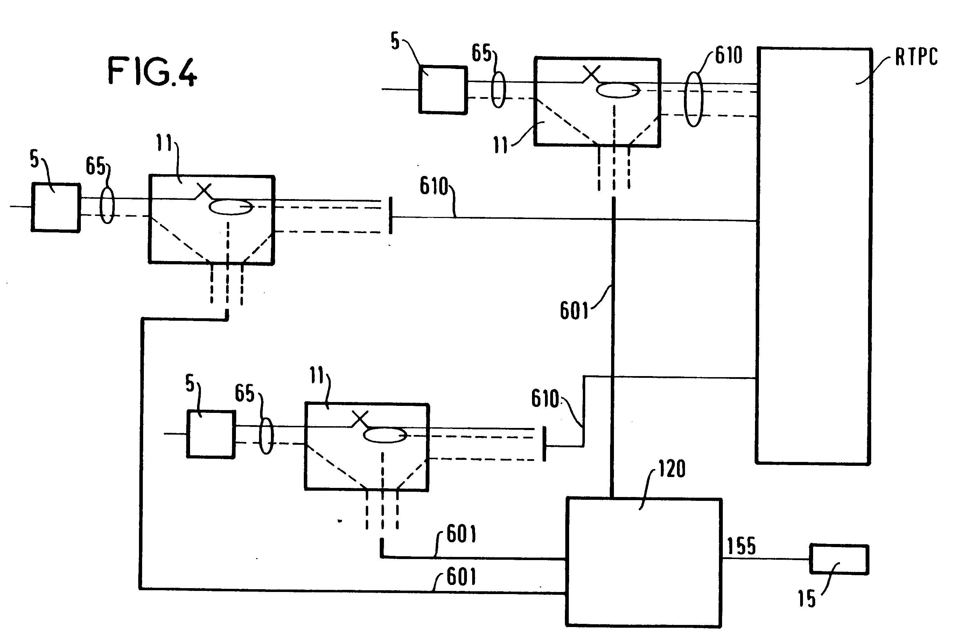

Selon un second mode de réalisation, illustré par la figure 4 chaque centre de commutation comporte un commutateur d'accès au service 11, et les points de contrôle radiomobiles de plusieurs centres de commutation sont regroupés en un point de contrôle commun 120 relié par des liaisons 601 à chaque commutateur d'accès au service 11, et par une liaison 155 à un centre d'exploitation et de maintenance radiomobile 15.

Ce deuxième mode de réalisation est rendu possible par la structure du centre de commutation de l'invention dans lequel les fonctions de commutation et celles de signalisation de l'application radiomobile sont séparées et effectuées par deux organes différents.

La structure d'un centre de commutation de l'invention permet d'utiliser, pour les commutateurs d'accès au service des commutateurs de même type que ceux équipant les réseaux téléphoniques publics commutés.

Dans la figure 1 qui représente une partie d'un réseau radiotéléphonique, les centres de commutation ne font pas partie du réseau téléphonique public commuté RTPC, puisque classiquement ce sont des centres de commutation spécialisés, mais sont reliés à un commutateur dudit réseau téléphonique.

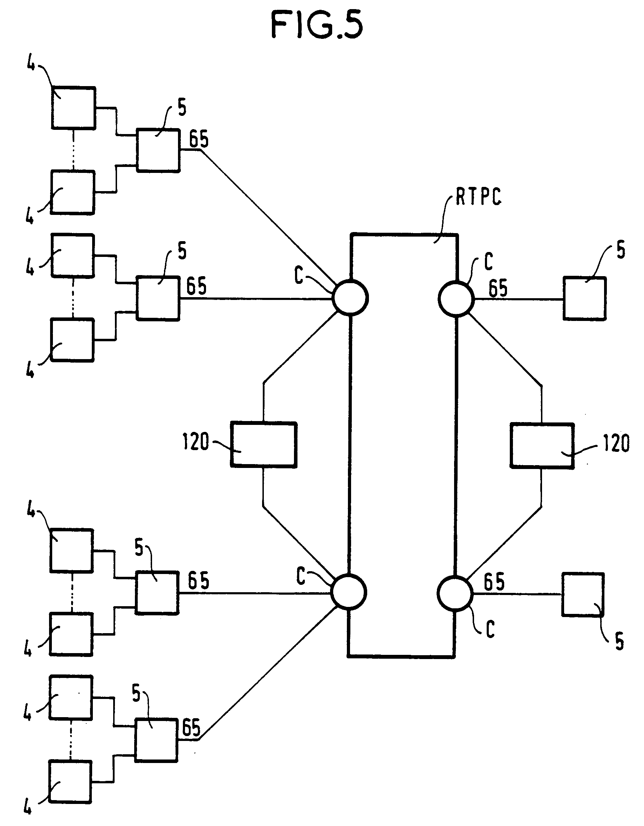

La structure d'un centre de commutation de l'invention permet, comme représenté figure 5, d'utiliser les commutateurs C du réseau téléphonique comme centres de commutation pour l'application radiomobile. Les commutateurs C sont alors reliés directement aux contrôleurs 5 des stations de base 4 ; ils sont également reliés à un point de contrôle radiomobile commun 120, ledit point de contrôle étant commun à plusieurs commutateurs situés dans une même zone géographique. Bien entendu un point de contrôle peut être relié à un seul commutateur C.

L'invention permet donc de supprimer les centres de commutation des réseaux rédiotéléphoniques, tout au moins dans la majorité des cas ; il est en effet toujours possible, pour des raisons particulières de couverture géographique, d'utiliser des centres de commutations qui seront reliés au réseau téléphonique, comme c'est actuellement le cas des réseaux radiotéléphoniques.

## Revendications

1. Centre de commutation pour application radiomobile, pour relier des abonnés mobiles à un réseau téléphonique public commuté (RTPC), ledit centre de commutation (6) étant relié par des premières liaisons multiplex (65) à des contrôleurs (5) eux-mêmes reliés à des stations de base (4) en liaison radioélectrique avec des abonnés mobiles, et par des deuxièmes liaisons multiplex (610) assurant le transport des signaux de parole, de données et de la signalisation associée, lesdites deuxièmes liaisons multiplex (610) assurant le transfert de signaux de parole, de données et de signalisation, qui comprennent des signaux de signalisation relatifs aux opérations de commutation et des signaux de signalisation relatifs à un fichier permanent (8) des abonnés mobiles, à un fichier temporaire (9) des abonnnés mobiles présents dans une zone géographique, et à d'autres centres de commutation de ladite zone géographique; les signaux de signalisation des première et deuxièmes liaisons multiplex étant acheminés selon le système de signalisation CCITT N°7 ; comprenant un commutateur d'accès au service (11) et un point de contrôle radiomobile (12) reliés entre eux par une liaison multiplex (601), ledit commutateur d'accès au service (11) assurant uniquement des fonctions de commutation et ledit point de contrôle radiomobile (12) assurant uniquement des fonctions de signalisation de l'application radiomobile;
ledit commutateur établissant :
- des liaisons semi-permanentes entre la liaison multiplex (601) et les deuxièmes liaisons multiplex (610) pour un échange de signaux de signalisation relatifs aux fichiers (8, 9) et aux autres centres de commutation (6) ;
- une liaison permanente entre la liaison multiplex (601) et un point de signalisation (PS) dudit commutateur d'accès au service, ledit point de signalisation étant également relié par des liaisons permanentes auxdites deuxièmes liaisons (610) pour un échange de signaux de signalisation relatifs aux opérations de commutation;
- et des liaisons semi-permanentes entre la liaison multiplex (601) et les premières liaisons multiplex (65) pour un échange de signaux de signalisation.

2. Centre de commutation selon la revendication 1, caractérisé par le fait que le commutateur d'accès au service (11) est un commutateur du réseau téléphonique public commuté (RTPC).

3. Centre de commutation selon l'une des revendications 1 et 2, caractérisé par le fait que le commutateur d'accès au service (11) est relié à un centre d'exploitation et de maintenance du réseau téléphonique public commuté (RTPC) et que le point de contrôle radiomobile (12) est relié à un centre d'exploitation et de maintenance radiomobile du réseau radiotéléphonique, ledit centre d'exploitation et de maintenance radiomobile étant également relié aux contrôleurs (5) des stations de base (4), et aux fichiers permanent (8) et temporaire (9).

4. Centre de commutation selon l'une des revendications 1 et 2, caractérisé par le fait que le point de contrôle radiomobile est commun à plusieurs commutateurs d'accès au service.

## Patentansprüche

1. Schaltzentrale für Mobilfunkanwendung, um mobile Teilnehmer mit einem drahtgebundenen öffentlichen Telefonnetz (RTPC) zu verbinden, wobei die Schaltzentrale (6) über erste Multiplexverbindungen (65) mit Kontrollorganen (5) verbunden ist, die ihrerseits mit Basisstationen (4) in Verbindung stehen, die Funkkontakt mit den mobilen Teilnehmern haben, sowie über zweite Multiplexverbindungen (610), die den Transfer von Sprach-, Daten- und zugeordneten Signalisationssignalen gewährleisten, zu denen Signalisationssignale bezüglich der Schaltoperationen und Signalisationssignale bezüglich einer permanenten Datei (8) der mobilen Teilnehmer, bezüglich einer vorübergehenden Datei (9) der sich in einer geographischen Zone befindenden mobilen Teilnehmer und bezüglich anderer Schaltzentralen dieser geographischen Zone enthalten, wobei die Signalisationssignale der ersten und zweiten Multiplexverbindungen gemäß dem Signalisationssystem CCITT N°7 übertragen werden, wobei die Schaltzentrale einen Dienst-Zugangsschalter (11) und einen Mobilfunk-Kontrollpunkt (12) besitzt, die miteinander über eine Multiplexverbindung (601) verbunden sind, wobei der Dienst-Zugangsschalter (11) nur Schaltaufgaben und der Mobilfunk-Kontrollpunkt (12) nur Signalisationsaufgaben der Mobilfunkanwendung erfüllt, wobei der Schalter
- semi-permanente Verbindungen zwischen der Multiplexverbindung (601) und den zweiten Multiplexverbindungen (610) zum Austausch von Signalisationssignalen betreffend die Dateien (8, 9) und die anderen Schaltzentralen (6) herstellt,
- eine permanente Verbindung zwischen der Multiplexverbindung (601) und einem Signalisationspunkt (PS) des Dienst-Zugangsschalters herstellt, wobei der Signalisationspunkt weiter über permanente Verbindungen mit den zweiten Verbindungen (610) für einen Austausch von Signalisationssignalen betreffend die Schaltoperationen verbunden ist;
- und semi-permanente Verbindungen zwischen der Multiplexverbindung (601) und den ersten Multiplexverbindungen (65) für eine Austausch von Signalisationssignalen herstellt.

2. Schaltzentrale nach Anspruch 1, dadurch gekennzeichnet, daß der Dienst-Zugangsschalter (11) eine Schaltzentrale des drahtgebundenen öffentlichen Telefonnetzes (RTPC) ist.

3. Schaltzentrale nach einem der Ansprüche 1 und 2, dadurch gekennzeichnet, daß der Dienst-Zugangsschalter (11) mit einer Betriebs- und Wartungszentrale des drahtgebundenen öffentlichen Telefonnetzes (RTPC) verbunden ist und daß der Mobilfunk-Kontrollpunkt (12) mit einer Mobilfunk-Betriebs- und Wartungszentrale des Funktelefonnetzes verbunden ist, wobei die Mobilfunk-Betriebs- und Wartungszentrale weiter mit den Kontrollorganen (5) der Basisstationen (4) und mit der permanenten (8) sowie der vorübergehenden Datei (9) verbunden ist.

4. Schaltzentrale nach einem der Ansprüche 1 und 2, dadurch gekennzeichnet, daß der Mobilfunk-Kontrollpunkt für mehrere Dienst-Zugangsschalter gemeinsam wirkt.

## Claims

1. A switching center for radiomobile application, for connecting mobile subscribers to a public switched telephone network (PSTN), said switching center (6) being connected via first multiplex links (65) to controllers (5) which are themselves connected to base stations (4) in radio communication with mobile subscribers, and via second multiplex links (610) conveying speech signals, data, and associated signalling, said second multiplex links (610) transferring the speech signals, data, and signalling including signalling relating to switching operations and signalling relating to a permanent file (8) of mobile subscribers, relating to a temporary file (9) of mobile subscribers present in a geographical zone, and relating to other switching centers in said geographical zone, the signalling of the first and second multiplex links being conveyed using the CCITT No. 7 signalling system; comprising a service access exchange (11) and a radiomobile control point (12) interconnected by an interconnecting multiplex link (601), said service access exchange (11) providing switching functions only, and said radiomobile control point (12) providing signalling functions for the radiomobile application only.
said exchange establishing:
- semi-permanent links between the multiplex link (601) and the second multiplex links (610) for interchanging signalling relating to the files (8, 9) and to the other switching centers (6);
- a permanent link between the multiplex link (601) and a signalling point (PS) of said service access exchange, said signalling point being also connected via permanent links to said second multiplex links (610) for interchanging signalling relating to switching operations; and
- semi-permanent links between the multiplex link (601) and the first multiplex link (65) for interchanging signalling.

2. A switching center according to claim 1, characterized by the fact that the service access exchange (11) is an exchange in the public switched telephone network (PSTN).

3. A switching center according to claim 1 or 2, characterized by the facts that the service access exchange (11) is connected to an operating and maintenance center of the public switched telephone network (PSTN) and that the radiomobile control point (12) is connected to a radiomobile operating and maintenance center of the radiotelephone network, said radiomobile operating and maintenance center being also connected to the controllers (5) of the base stations (4) and to the permanent and temporary files (8, 9).

4. A switching center according to claim 1 or 2, characterized by the fact that the radiomobile control point is common to a plurality of service access exchanges.
